Europäisches Patentamt

(19) European Patent Office

Office européen des brevets

(11) Veröffentlichungsnummer: **0 003 980**
**B1**

(12) **EUROPÄISCHE PATENTSCHRIFT**

(45) Veröffentlichungstag der Patentschrift:
07.10.81

(21) Anmeldenummer: 79100454.2

(22) Anmeldetag: 16.02.79

(51) Int. Cl.³: **F 02 C 1/02,** F 02 C 1/04,
F 24 J 3/00, F 24 J 3/04,
F 28 D 17/00

(54) **Thermischer Kraftspeicher.**

(30) Priorität: **13.03.78 DE 2810890**

(43) Veröffentlichungstag der Anmeldung:
**19.09.79 Patentblatt 79/19**

(45) Bekanntmachung des Hinweises auf die Patenterteilung:
**07.10.81 Patentblatt 81/40**

(84) Benannte Vertragsstaaten:
**BE CH FR GB IT LU NL SE**

(56) Entgegenhaltungen:
**CH-A-281 557**
**DD-A-99 415**
**DE-A-2 305 686**
**DE-A-2 419 778**
**DE-B-1 207 712**
**GB-A-753 930**
**US-A-2 820 348**
**US-A-2 973 622**
**US-A-3 677 008**
**US-A-4 061 267**

(73) Patentinhaber: **Messerschmitt-Bölkow-Blohm
Gesellschaft mit beschränkter Haftung, Postfach 801109,
D-8000 München 80 (DE)**

(72) Erfinder: **Weissenbach, Bertrand, Dr.,
Putzbrunnerstrasse 172, D-8000 München 83 (DE)**

ACTORUM AG.

## Thermischer Kraftspeicher

Die Erfindung betrifft einen thermischen Kraftspeicher mit Gas, vorzugsweise Luft, als Wärmeträger.

Eine rationelle Energienutzung setzt voraus, dass eine Abstimmung auf den Bedarf so erfolgen kann, dass einerseits Bedarfsspitzen ohne weiteres abgedeckt werden können, andererseits aber unvermeidbare Überproduktionen von Energie nicht ungenutzt verlorengehen. Auch für die Nutzung der Solar- und Windenergie ist es von ausschlaggebender Bedeutung, den zeitlich verschobenen Bedarf und Anfall von Energie ausgleichen zu können.

Es ist der Vorschlag eines Solarkraftwerkes mit einem Langzeitspeicher bekannt geworden, bei dem in einem Schotterbett mit Luft als Wärmeträger und Temperaturen bis zu 850°C gearbeitet werden soll (sh. Axel Urbanek, «Alle Kraft von der Sonne», 1/76, S. 19, Zeitschrift für Kommunalwirtschaft). Von der Sonne über nachgeführte Spiegel aufgefangene Strahlung gelangt über einen Umlenkspiegel durch einen optischen Schacht in einen unterirdisch angelegten Wärmespeicher. Dort wird das aus Sand, Kies o.ä. bestehende Speichermaterial erhitzt. In den Speicher wird Luft eingeleitet, erhitzt und zum Antrieb einer herkömmlichen Dampfturbinen-Generatoranlage wieder entnommen.

Ungeachtet des zitierten Vorschlages konnten sich thermische Kraftspeicher, zumal mit Gas als Wärmeträger, bisher nicht durchsetzen. Die Kraftspeicherung erfordert entweder hohe Speicherdrücke (Heisswasser) oder haben ihre Grenzen von Preis- und Temperaturbeständigkeit der Speichermedien her (Thermoöle).

Bei der Verwendung von Gas als Wärmeträger und Wärmespeicherung in Festkörpern waren nach den bisherigen Konzepten hohe Lüfterleistungen bzw. aufwendige Wärmetauscher erforderlich. Gasturbinenprozesse, bei welchen der gasförmige Wärmeträger gleichzeitig als Arbeitsmedium dient, erfordern normalerweise grosse, druckfeste Speicher auf hohem Temperaturniveau.

Zum Stand der Technik zählt gem. Art. 54 Absatz 3 auch die EP-A-0 001 410. Dort wird ein thermischer Kraftspeicher beschrieben, der ebenfalls mit Gas als Wärmeträger betrieben werden soll.

Aufgabe der Erfindung ist es, einen thermischen Kraftspeicher mit Gas, vorzugsweise Luft als Wärmeträger anzugeben, der geeignet ist, Energie verbrauchernah unter grösstmöglicher Sicherheit und Schonung der Umwelt zu speichern.

Diese Aufgabe ist dadurch gelöst, dass ein wechselweise arbeitender Motor/Generator, ein Verdichter und eine Turbine miteinander verbunden sind, dass Verdichter und Turbine über ein Leitungssystem mit einem Wärmespeicher und einem Regenerator verbunden sind, dass zur Steuerung des Gasstromes zum Laden bzw. Entladen des Wärmespeichers dienende Umschaltorgane vorhanden sind, über die der Regenerator beim Ladevorgang stromaufwärts des Verdichters und beim Entladevorgang stromabwärts der Turbine angeordnet ist, dass ein Frischluftzutritt beim Ladevorgang stromaufwärts des Regenerators und beim Entladevorgang stromaufwärts des Verdichters vorgesehen ist, und dass ein Abluftaustritt seinerseits sich beim Ladevorgang stromabwärts der Turbine und beim Entladevorgang stromabwärts des Regenerators befindet und dass die Umschaltorgane so schaltbar sind, dass beim Laden Frischluft in Strömungsrichtung nacheinander über den Regenerator, den Verdichter, den Wärmespeicher und die Turbine leitbar ist, und dass beim Entladen Frischluft in Strömungsrichtung nacheinander über den Verdichter, den Wärmespeicher, die Turbine und den Regenerator leitbar ist.

Um neben der umweltfreundlichen Speicherung auch eine Schonung der Landschaft zu erreichen, ist weiter vorgesehen, dass der Speicher im Erdboden versenkbar ist.

Neben weiteren vorteilhaften Ausbildungen ist von Bedeutung, dass zwischen Verdichter und kalter Seite, d.h. Auslasseite des Wärmespeichers ein Wärmetauscher vorgesehen ist. Damit kann jede gewünschte Ablufttemperatur im Rahmen der Erfordernisse von Heizung und Klimatisierung mit üblichen Wirkungsgraden ohne zusätzliche Änderung der Auslegung realisiert werden.

Weitere vorteilhafte Ausgestaltungen finden sich in den Unteransprüchen.

Ein Speicher der vorgeschlagenen Art weist eine Reihe von Vorteilen auf. Trockene Festkörper-Schüttungen mit Gas oder Luft als Wärmeträger sind preiswert, besitzen grosse innere Wärmeaustauschflächen und stellen keine extremen Anforderungen an die Dichtigkeit des Kreislaufes. Die Speichertechnik in Kombination mit einer Gasturbine erlaubt den Einsatz konventioneller Bautechnik zur Realisierung und garantiert hohe Lebensdauer der Speicher. Auch kleinere Einheiten lassen sich wirtschaftlich ausführen, der Wirkungsgrad ist mindestens dem von Batteriespeicherwerken vergleichbar. Elektrische Energie kann in Wärme umgesetzt in der Schwachlastzeit verbrauchernah gespeichert werden, daher kann z.B. die installierte Leistung von Kernkraftwerken besser ausgenutzt werden. Da auch die Standortwahl weitgehend frei ist, ergibt sich aus allem ein guter energiewirtschaftlicher Gesamtwirkungsgrad. Die Verwendung in der Solartechnik bietet neben anderem auch den Vorteil, dass Kühlprobleme völlig entfallen. Die Verluste der Kraftspeicherung fallen in Form sauberer Abluft mit einstellbarem Temperaturniveau an, können z.B. im Gegensatz zu hydraulischen Pumpspeicherwerken also unmittelbar etwa für Raum-Heizung, -klimatisierung weiterverwendet werden.

Die Erfindung ist anhand der Figuren und der nachfolgenden Beschreibung näher erläutert.

Es zeigen
Fig. 1a, 1b, 1c das Prinzip der thermischen Kraftspeicherung mit Luft als Wärmeträger und Arbeitsmedium,
Fig. 2 Prinzipschaltbild mit Absperrorganen für Umschaltung,
Fig. 3a, 3b ein Ausführungsbeispiel eines thermischen Kraftspeichers.

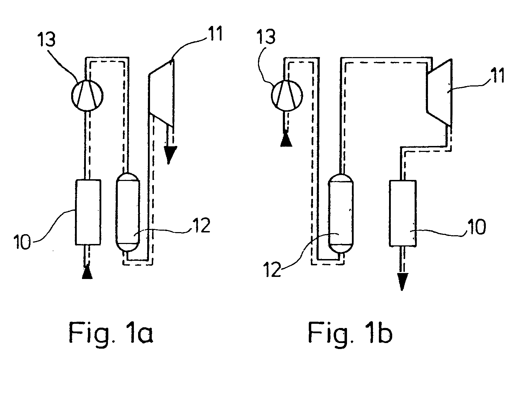

Gemäss Fig. 1a erfolgt die Ladung eines Wärmespeichers 12 nach dem Prinzip einer Wärmepumpe durch Verdichtung vorgewärmter Luft mittels Verdichter 13 aus einem drucklosen Regenerator 10. Die verdichtete Luft gelangt über den Wärmespeicher 12 zu einer Turbine 11. Die Temperatur der aus der Turbine 11 austretenden Luft liegt nahe bei der Umgebungstemperatur, da die Luft im unteren Teil des Wärmespeichers regenerativ gekühlt wird.

In Fig. 1b ist der Vorgang des Entladens dargestellt. Frischluft wird verdichtet und im Wärmespeicher 12 weiter aufgewärmt. Die aufgewärmte Luft gelangt zu der Turbine 11 und wird dort entspannt. Die in der Abluft der Turbine 11 enthaltene Restwärme wird im Regenerator 10 drucklos gespeichert und dient beim Laden zur Vorwärmung der Ansaugluft.

Lade- und Entladewirkungsgrad liegen zwischen 0,65 und 0,75. Der Wirkungsgrad der Speicherung hängt abgesehen von den üblichen Verlusten von den Temperaturen und dem Druckverhältnis ab. Er steigt mit der Speichertemperatur und sinkt mit steigendem Druckverhältnis. Der Grund dafür ist, dass bei einem regenerativen Prozess die mittlere Arbeitstemperatur sich mit kleiner werdendem Druckverhältnis immer mehr der oberen Temperatur annähert, wodurch das Verhältnis von Turbinenleistung zu Kompressorleistung immer besser wird.

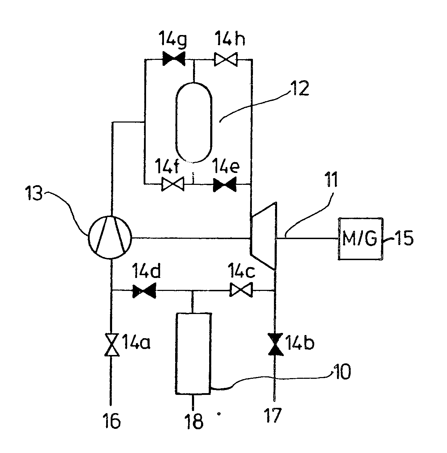

Fig. 2 zeigt, wie Ladung und Entladung erfolgen. Hier, wie auch in Fig. 1a, b, sind der Anschaulichkeit halber für die einzelnen Bauteile dieselben Bezugszeichen verwendet worden. Als Umschaltorgane 14a bis 14h können einfache Schieber dienen, die nur die aus den Strömungswiderständen resultierenden Druckdifferenzen aufnehmen. Die Organe 14b, 14d, 14e, 14g sind beim Laden geöffnet, während die übrigen geschlossen sind und umgekehrt beim Entladen. Der Vorgang des Ladens bzw. Entladens ist bereits oben anhand der Fig. 1a, 1b, 1c erläutert worden. Zusätzlich sind mit 16 ein Frischluft-Zutritt für den Verdichter 13, mit 18 ein Frischluft-Zutritt beim Regenerator 10, mit 17 ein Abluft-Austritt hinter der Turbine 11 und mit 15 ein mit dem Verdichter 13 und der Turbine 11 verbundener Motor/Generator bezeichnet.

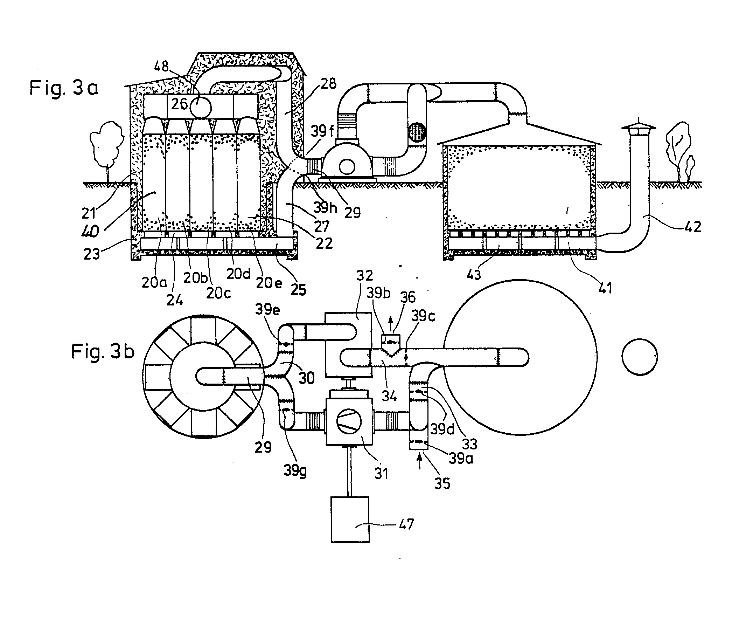

Fig. 3a zeigt eine Ausführung eines thermischen Kraftspeichers mit einem Regenerator 41. Der Wärmespeicher 40 besteht aus mehreren Hohlkörpern, vorzugsweise Stahlrohren 20a bis 20e von 2,5 m Durchmesser, welche innerhalb einer gemeinsamen Wärmedämmung 21 parallel und senkrecht stehend angeordnet sind. Die Anzahl der Hohlkörper ist abhängig von der ge-wünschten Grössenordnung des Wärmespei-chers. Die äussere Form der Wärmedämmung kann rund, viereckig oder beliebig geeignet sein. Als Speichermasse in den Hohlkörpern 20a...20e dient eine Füllung aus kugelförmigen Festkörpern, wobei Keramikkugeln besonders geeignet sind. Je nach gewünschter Kapazität sind Strö-mungswiderstand des Speichers, Wärmeüber-gangsfläche des Speichermaterials und Filterlän-ge aufeinander abzustimmen. Keramikkugeln in Verbindung mit warmfesten Stahlrohren gestatten auch die Verarbeitung höherer Temperaturen bis ca. 800 bis 900°C.

Um die Wärmeleitung längs des Stahlmantels der Hohlkörper 20a...20e in Grenzen zu halten, können nicht näher dargestellte spiralförmig aufgeschweisste Rippen dienen, so dass längere Wärmeleitwege geschaffen werden.

Die Hohlkörper 20a...20e sind an ihren unteren Enden 22 auf ein Fundament 23 aufgesetzt. Das Fundament 23 ist so mit Öffnungen 24 versehen, dass die Luft durchtreten kann, ohne dass die Standsicherheit oder die Speichermasse in Mitleidenschaft gezogen werden. Ein unterer Sammelraum 25, der die kalte Seite, d.h. die Auslassseite des Wärmespeichers 40 und ein oberer Sammelraum 26, der die warme Seite, d.h. die Eingangsseite des Wärmespeichers 40 beinhaltet, münden in Leitungen 27, 28.

Es folgen nach einer gemeinsamen Leitung 29 (siehe auch Fig. 3a) und einer Gabelung 30 ein Verdichter 31 und eine Turbine 32. Beiden gemeinsam ist ein Motorgenerator 47. Der Regenerator 41 ist über Leitungen 33, 34 mit Verdichter 31 und Turbine 32 verbunden. Der Regenerator 41 hat einen Zugang zur Aussenwelt über die Leitung 42. Durch Öffnungen 35 und 36 tritt die Aussenluft ein bzw. Abluft aus.

Der Regenerator 41 weist eine Schüttung aus grobem Material auf, etwa Kies oder auch Keramikkugeln. Sein Fundament 43 weist wie beim Speicher Öffnungen für den Luftdurchtritt auf. Zur Vermeidung von Materialaustritt können hier wie dort nicht dargestellte Stahlroste oder Matten untergelegt sein.

Die Absperrorgane, die funktionell denen entsprechen, welche in Fig. 2 dargestellt sind, sind hier mit 39a bis h bezeichnet.

Die Funktion der Anlage entspricht der wie bereits anhand der Fig. 1 und 2 beschriebenen Prinzipschaltung, so dass darauf verwiesen werden kann. Nur zum besseren Verständnis ist der Ladevorgang noch einmal nachskizziert.

Durch die Leitung 42 tritt Frischluft in den Regenerator 41 ein und wird dort vorgewärmt. Über das Umschaltorgan 39d gelangt bei geschlossenem Organ 39c und 39a die Luft zum Verdichter 31 und weiter über das Organ 39g zu der oberen Öffnung der Hohlkörper. Über die Organe 39e tritt Luft aus der Leitung 27 in die Turbine 32 ein und kann von da über den Umschalter 39b zur weiteren Nutzung entnommen werden.

Ein thermischer Kraftspeicher der erfindungsgemässen Art kann in weiten Bereichen der Energieversorgung, insbesondere als Alternative zu Pumpspeicherwerken und Batteriespeicherwerken eingesetzt werden. Bei einer Ausführung als Speicherkraftwerk können eine Vielzahl von Wärmeerzeugern, wie Kraftwerke, Industrieabwärme, Solarwärme u.ä. in Betracht kommen. Hierzu bedarf es lediglich eines nicht näher dargestellten Anschlusses 48 für die Einleitung von Wärme auf der Eingangsseite 26 des Kraftspeichers.

Die ganze Anlage kann auch teilweise oder vollständig in den Erdboden abgesenkt werden, so dass eine noch weitere Schonung der Umwelt erreicht werden kann.

## Patentansprüche

1. Thermischer Kraftspeicher mit Gas, vorzugsweise Luft als Wärmeträger, dadurch gekennzeichnet, dass ein wechselweise arbeitender Motor/Generator (15, 47) und ein Verdichter (13, 31) und eine Turbine (11, 32) miteinander verbunden sind, dass Verdichter (13, 31) und Turbine (11, 32) über ein Leitungssystem mit einem Wärmespeicher (12, 40) und einem Regenerator (10, 41) verbunden sind, dass zur Steuerung des Gasstromes zum Laden bzw. Entladen des Wärmespeichers (12, 40) dienende Umschaltorgane (14a...14e) vorhanden sind, über die der Regenerator (10, 41) beim Ladevorgang stromaufwärts des Verdichters (13, 31) und beim Entladevorgang stromabwärts der Turbine (11, 32) angeordnet ist, dass ein Frischluftzutritt (16, 35) beim Ladevorgang stromaufwärts des Regenerators (10, 41) und beim Entladevorgang stromaufwärts des Verdichters (13, 31) vorgesehen ist und dass ein Abluftaustritt (17, 36) seinerseits sich beim Ladevorgang stromabwärts der Turbine (11, 32) und beim Entladevorgang stromabwärts des Regenerators (10, 41) befindet und dass die Umschaltorgane (14a...14e) so schaltbar sind, dass beim Laden Frischluft in Strömungsrichtung nacheinander über den Regenerator (10, 41), den Verdichter (13, 31), den Wärmespeicher (12, 40) und die Turbine (11, 32) leitbar ist, und dass beim Entladen Frischluft in Strömungsrichtung nacheinander über den Verdichter (13, 31), den Wärmespeicher (12, 40), die Turbine (11, 32) und den Regenerator (10, 41) leitbar ist.

2. Thermischer Kraftspeicher nach Anspruch 1, dadurch gekennzeichnet, dass zwischen dem Verdichter (13, 31) und der Auslasseite des Wärmespeichers (12, 40) ein Wärmetauscher vorgesehen ist.

3. Thermischer Kraftspeicher nach Anspruch 1 oder Anspruch 2, dadurch gekennzeichnet, dass der Wärmespeicher (12, 40) aus mehreren, parallelen, senkrecht stehenden Hohlkörpern (20a...20e) besteht, welche innerhalb einer gemeinsamen Wärmedämmung (21) angeordnet sind und dass die Hohlkörper auf einem den Durchtritt des Wärmeträgers gestattenden Fundament (23) aufgesetzt sind.

4. Thermischer Kraftspeicher nach Anspruch 3, dadurch gekennzeichnet, dass die Hohlkörper (20a...20e) Rohre sind und aus warmfestem Stahl gefertigt sind.

5. Thermischer Kraftspeicher nach Anspruch 4, dadurch gekennzeichnet, dass die Rohre Rippen aufweisen.

6. Thermischer Kraftspeicher nach den vorhergehenden Ansprüchen, dadurch gekennzeichnet, dass der Wärmespeicher (12, 40) eine Speicherfüllung aus Keramikkugeln aufweist.

7. Thermisches Speicherkraftwerk ausgehend von einem oder mehreren thermischen Kraftspeichern nach einem oder mehreren der vorhergehenden Ansprüche, dadurch gekennzeichnet, dass ein der Einleitung von aus beliebigen Quellen stammender Wärme dienender Anschluss (48) an der Eingangsseite (26) des Wärmespeichers vorgesehen ist.

## Claims

1. Thermal accumulator with gas, preferably air, as the heat medium, characterized in that an alternately working engine/generator (15, 47), a compressor (13, 31) and a turbine (11, 32) are linked together, in that compressor (13, 31) and turbine (11, 32) are connected via a piping system to a heat accumulator (12, 40) and a regenerator (10, 41), in that switchover elements (14a...14e), via which the regenerator (10, 41) is located upstream of the compressor (13, 31) for charging and downstream of the turbine (11, 32) for discharging, are provided for controlling the flow of gas for charging and discharging the heat accumulator (12, 40), in that a fresh air inlet (16, 35) is provided upstream of the regenerator (10, 41) for charging and upstream of the compressor (13, 31) for discharging, and in that an exhaust air outlet (17, 36) is in turn located downstream of the turbine (11, 32) for charging and downstream of the regenerator (10, 41) for discharging, and in that the switchover elements (14a...14e) can be switched in such a way that, for charging, fresh air can be passed in the direction of flow successively through the regenerator (10, 41), the compressor (13, 31), the heat accumulator (12, 40) and the turbine (11, 32), and in such a way that, for discharging, fresh air can be passed in the direction of flow successively through the compressor (13, 31), the heat accumulator (12, 40), the turbine (11, 32) and the regenerator (10, 41).

2. Thermal accumulator as defined in Claim 1, characterized in that a heat exchanger is provided between the compressor (13, 31) and the outlet side of the heat accumulator (12, 40).

3. Thermal accumulator as defined in Claim 1 or Claim 2, characterized in that the heat accumulator (12, 40) consists of several parallel, upright hollow bodies (20a...20e) arranged within common heat insulation (21), and in that the hollow bodies are positioned on a foundation (23) permitting the passage of the heat medium.

4. Thermal accumulator as defined in Claim 3, characterized in that the hollow bodies (20a...20e) are tubes made from heat-resistant steel.

5. Thermal accumulator as defined in Claim 4, characterized in that the tubes exhibit ribs.

6. Thermal accumulator as defined in the preceding Claims, characterized in that the heat accumulator (12, 40) has a storage packing of ceramic balls.

7. Thermal accumulator station proceeding from one or more thermal accumulators as defined in one or more of the preceding Claims, characterized in that a connection (48) serving to admit heat originating from any given sources is provided at the input end (26) of the heat accumulator.

**Revendications**

1. Accumulateur thermodynamique d'énergie utilisant un gaz, de préférence de l'air, comme fluide caloporteur, caractérisé en ce qu'un moteur/générateur (15, 47) travaillant en alternance, un compresseur (13, 31) et une turbine (11, 32) sont reliés entre eux, que le compresseur (13, 31) et la turbine (11, 32) sont reliés par l'intermédiaire d'un système de conduites à un accumulateur de chaleur (12, 40), et à un régénérateur (10, 41), que l'ensemble comprend des éléments de commutation (14a...14e) pour la commande des processus de charge et de décharge, moyennant lesquels le régénérateur (10, 41) se trouve en amont du compresseur (13, 31) lors de la charge et en aval de la turbine (11, 32) lors de la décharge, qu'une amenée d'air frais (16, 35) est prévue en amont du régénérateur (10, 41) lors de la charge et en amont du compresseur (13, 31) lors de la décharge, et qu'une sortie d'air (17, 36) usagé est située de son côté en aval de la turbine (11, 32) lors de la charge et en aval du régénérateur (10, 41) lors de la décharge et que les éléments de commutation (14a...14e) sont de leur côté manœuvrables de telle sorte que lors de la charge, de l'air frais peut être expédié dans le sens de l'écoulement à travers respectivement le régénérateur (10, 41), le compresseur (13, 31), l'accumulateur (12, 40) et la turbine (11, 32), et que lors de la décharge, de l'air frais peut être expédié dans le sens de l'écoulement à travers respectivement le compresseur (13, 31), l'accumulateur (12, 40), la turbine (11, 32), et le régénérateur (10, 41).

2. Accumulateur thermodynamique d'énergie selon la revendication 1, caractérisé en ce qu'un échangeur de chaleur est prévu entre le compresseur (13, 31) et la sortie de l'accumulateur (12, 40).

3. Accumulateur thermodynamique d'énergie selon l'une des deux revendications 1 ou 2, caractérisé en ce que l'accumulateur (12, 40) est constitué de plusieurs corps creux parallèles (20a...20e) disposés verticalement à l'intérieur d'un isolateur thermique commun (21), et qu'ils reposent sur une fondation (23) pouvant être traversée par le fluide caloporteur.

4. Accumulateur thermodynamique d'énergie selon la revendication 3, caractérisé en ce que les corps creux (20a...20e) sont des tubes en acier réfractaire.

5. Accumulateur thermodynamique selon la revendication 4, caractérisé en ce que les tubes sont dotés d'ailettes.

6. Accumulateur thermodynamique selon les revendications ci-dessus, caractérisé en ce que l'accumulateur (12, 40) est doté d'un remplissage de billes céramique.

7. Centrale (électrique) à accumulation thermique basée sur un ou plusieurs accumulateurs thermodynamiques selon une ou plusieurs des revendications ci-dessus, caractérisée en ce qu'à l'entrée (26) de l'accumulateur, un branchement (48) permet l'adduction de chaleur issue d'une source quelconque.

Fig. 1a

Fig. 1b

Fig. 3a

Fig. 3b